# EUROPEAN PATENT SPECIFICATION

(11) **EP 3 457 344 B1**
(45) Date of publication and mention of the grant of the patent: **21.09.2022**
(21) Application number: 17795359.3
(22) Date of filing: 10.04.2017
(51) Int. Cl.: G06Q 20/40, G06Q 20/30, G06Q 20/32, G06Q 20/38, G06Q 20/34

(54) **PAYMENT AUTHENTICATION METHOD, APPARATUS AND SYSTEM FOR ONBOARD TERMINAL**
VERFAHREN, VORRICHTUNG UND SYSTEM ZUR ZAHLUNGSAUTHENTIFIZIERUNG FÜR EIN BORDEIGENES ENDGERÄT
PROCÉDÉ, APPAREIL ET SYSTÈME D'AUTHENTIFICATION DE PAIEMENT POUR UN TERMINAL EMBARQUÉ

(30) Priority: 09.05.2016 CN 201610302680
(43) Date of publication of application: 20.03.2019
(73) Proprietor: Alibaba Group Holding Limited, Grand Cayman (KY)
(72) Inventor: FANG, Qiang, Hangzhou Zhejiang 311121 (CN); DUAN, Chao, Hangzhou Zhejiang 311121 (CN)
(74) Representative: Barker Brettell LLP
(86) International application number: PCT/CN2017/079867
(87) International publication number: WO 2017/193741

(56) References cited:
- WO-A1-2014/184771
- CN-A- 101 866 517
- CN-A- 104 616 148
- CN-A- 104 636 924
- CN-A- 105 550 863
- CN-U- 201 444 326
- CN-U- 204 347 911
- US-A1- 2008 229 098
- US-A1- 2013 095 754
- US-A1- 2014 279 565
- US-A1- 2015 178 726
- US-A1- 2015 294 303
- US-A1- 2015 371 026

## Description

### Technical Field

The present application relates to the field of mobile payment, and, more particularly, to a payment authentication method, apparatus and system for an onboard terminal.

### Background

With the rapid development of Internet technologies, Internet payment has become an indispensable part of people's daily life. At present, mainstream Internet payment methods mainly include PC terminals, mobile terminals and so on. At present, the PC terminals mainly provide Internet payment services by means of Web. The PC terminals use browsers as tools for user interactions, and adopt payment applications in browser/server (B/S) architecture. After a user submits an order through a merchant website, the merchant website is redirected to a website of a payment institution, and the payment institution initiates an authentication request to the user. After the user provides authentication information, a server terminal performs verification, completes the authentication process, and then completes the transaction. The mobile terminals mainly provide Internet payment services by means of application programs, and adopt payment applications in client/server (C/S) architecture. After a user confirms an order through an application program of a merchant, the application program of the merchant is automatically redirected to a payment application program, and the payment application program directly initiates an authentication request to the user. After the user provides authentication information, a server terminal performs verification, and completes the authentication process and the transaction.

Recently, onboard terminals have also begun to use Internet payment services. At present, the process of transaction authentication for the onboard terminals is the same as that of the mobile terminals. Existing Bluetooth payment verification systems and methods for Bluetooth headsets and mobile phones generally adopt a manner of obtaining IDs of the Bluetooth headsets directly without encrypting and signing identification information of Bluetooth devices, and transmitting device IDs in a plain text manner. There is a risk that the device IDs could be stolen and tampered with, which will affect the payment security.

In conclusion, the existing mobile payment technology applied to onboard terminals has the problem of poor payment security.

Examples of known payment authentication methods and systems are disclosed in the following:
US2015/178726 - teaches a method of authenticating a payment request from a requesting terminal is performed at a computer server having one or more processors and memory storing program modules to be executed by the one or more processors. The computer server receives a payment request from the requesting terminal. If the payment request satisfies predefined authentication conditions, the computer server sends a payment authentication request to an authentication terminal associated with the requesting terminal and receives a response to the payment authentication request from the authentication terminal. The computer server forwards the payment request to a payment server if the response indicates that the payment authentication request succeeds. Otherwise, the computer server notifies the requesting terminal that the payment request is denied if the payment authentication request fails.

WO2014184771 - describes a method and system for provisioning payment credentials usable by a mobile device in conducting a payment. The method is conducted at a provisioning system and comprises the steps of: receiving payment credentials from a receiving device, the payment credentials having been obtained from a portable payment device presented by a consumer at the receiving device; receiving, from the receiving device, an identifier entered by the consumer; identifying a mobile device or a secure element corresponding to the identifier; and communicating the payment credentials or a derivation of the payment credentials to the identified mobile device or the secure element to be securely stored in association with the mobile device. The method may include: encrypting the received payment credentials, the encrypted payment credentials having a unique decryption key; and wherein communicating a derivation of the payment credentials communicates the unique decryption key.

US2014279565 - teaches a system and method for providing a touch sensor disposed in a vehicle, wherein the touch sensor may be a portable device that is removable from the vehicle such as a tablet computer or it may be a built-in device, wherein the touch sensor may store account information in a secure element in order to make a secure payment by wirelessly communicating with a merchant terminal from within the vehicle in order to make a financial transaction without giving a physical credit or debit card to the merchant.

US2013095754 - discloses a system and method including an attachment with a near field communication antenna, a secure element, a plug capable of connecting the attachment to an audio jack on a mobile device. The method comprises receiving a payment initiation instruction from a customer, using a near field communication antenna, sending payment information to a point of sale device, using one or more computer processors, encoding data related to the payment as audio data, and transmitting the data related to the payment through an audio jack.

US2008229098 - teaches a system and method for authenticating an on-line user by authenticating the computing device being used by the user. The method comprises reading device information from a computing device, creating a device credential from the device information; and, communicating the device credential to an authenticating body for authentication. The method additionally comprises receiving personal information from a user; creating a user credential from the personal information and, communicating the user credential along with the device credential to the authenticating body for authentication.

US2015371026 - discloses a system and/or method is provided to implement authentication via Bluetooth devices. In particular, a user's Bluetooth device, such as a smart phone, is registered to be used for automatic authentication for an online user account. When the user is attempting to log onto the online user account at a user device, such as a laptop, the user device may detect that the user's Bluetooth device is in proximity to the user device and the user may be logged into the online user account at the user device automatically. Thus, the user is logged into the online user account seamlessly without requiring the user to input credentials, such as user name and/or password.

### Summary

The present application provides a payment authentication method according to Claim 1, a device according to Claim 4 and apparatus according to Claim 6, so as to solve the technical problem of poor payment security in an existing mobile payment technology applied to onboard terminals.

Compared with the conventional techniques, the present application obtains the following technical effects:
According to the present payment authentication method, device and apparatus, a user device identifier and a user identifier are acquired, the user device identifier and the user identifier are encrypted on an onboard terminal, and an encrypted file is transmitted to a server. The encrypted file is decrypted in the server to generate a private key certificate of the user device and establish a binding relationship between the user device identifier and the user identifier. The private key certificate is encrypted and then transmitted to the onboard terminal and is decrypted on the onboard terminal. The decrypted private key certificate is stored in a trusted environment of a Bluetooth device. Payment certification information including the user device identifier and the user identifier is encrypted using the private key certificate, and the encrypted user device identifier and the encrypted user identifier are sent to the server, so that the server verifies whether there is a binding relationship between the user device identifier and the user identifier and then performs payment processing, which solves the problem of a complicated payment process and poor payment security in an existing mobile payment technology applied to onboard terminals. All files are transmitted in an encrypted manner in the process of acquiring the private key certificate, which improves the security of payment authentication. In the payment process of the onboard terminal, it is unnecessary for a motor vehicle driver to perform excessive operations, and the payment process is simple, thus guaranteeing the driver's safety and improving user's payment experience.

### Brief Description of the Drawings

The accompanying drawings described here are used to provide further understanding of the present application, and constitute a part of the present application. Example embodiments of the present application and descriptions of the example embodiments are used to explain the present application, and do not improperly limit the present application. In the drawings:
FIG. 1 is a structural block diagram of a system according to Embodiment 1 of the present application;
FIG. 2 is a structural block diagram according to Embodiment 2 of the present application;
FIG. 3 is another structural block diagram according to Embodiment 2 of the present application;
FIG. 4 is still another structural block diagram according to Embodiment 2 of the present application;
FIG. 5 is a structural block diagram according to another example;
FIG. 6 is another structural block diagram according to FIG. 5;
FIG. 7 is a structural block diagram according to another example ;
FIG. 8 is another structural block diagram according to FIG. 7;
FIG. 9 is still another structural block diagram according to FIG. 7;
FIG. 10 is a flowchart of a method according to Embodiment 2 of the present application;
FIG. 11 is a flowchart of another method according to Embodiment 2 of the present application;
FIG. 12 is a flowchart of still another method according to Embodiment 2 of the present application;
FIG. 13 is a flowchart of another example method according to the example of FIG. 5;
FIG. 14 is a flowchart of another example method according to the example of FIG. 5;
FIG. 15 is a flowchart of still another method according to the example of FIG. 5;
FIG. 16 is a flowchart of another example method according to the example of FIG. 7;
FIG. 17 is a flowchart of another method according to the example of FIG. 7;
FIG. 18 is a flowchart of still another method according to the example of FIG. 7;
FIG. 19 is a schematic diagram of an operating method according to another example ; and
FIG. 20 is a schematic diagram of another operating method according to the example of FIG. 19.

### Detailed Description

Implementation manners of the present application will be described below in detail with reference to the accompanying drawings and embodiments, whereby implementation processes of how the present application uses technical means to solve the technical problem and achieve technical effects may be fully understood and implemented accordingly.

For example, certain terms are used in the specification and the claims to refer to specific components. Those skilled in the art should understand that hardware manufacturers may name the same component using different terms. The specification and the claims do not distinguish components by name differences, but by functional differences between the components as criteria. If "include" as mentioned in the entire specification and claims is an open term, it should be interpreted as "include, but not limited to." "Substantially" means that, within an acceptable error range, those skilled in the art may solve the technical problem and basically achieves the technical effect within a certain error range. In addition, the term "coupling" or "electrical connection" here contains any direct and indirect means of electrical coupling. Therefore, if it is described in the text that a first apparatus is coupled to a second apparatus, it represents that the first apparatus may be directly electrically coupled to the second apparatus or indirectly electrically coupled to the second apparatus through another apparatus or coupling means. The subsequent description of the specification is a preferred implementation manner of implementing the present application, but the description is intended to clarify the general principle of the present application and is not intended to limit the scope of the present application. The protection scope of the present application should be subject to the scope as defined in the appended claims.

It should be further noted that the terms "include" and "comprise" or any other variations intend to cover non-exclusive inclusion, so that a process, method, commodity or system including a series of elements not only include the elements, but also include other elements not explicitly listed, or also include elements inherent to the process, method, commodity or system. In the absence of more limitations, the element defined by the expression "including one..." do not exclude that the process, method, commodity or system including the element also has another identical element.

### Embodiment 1

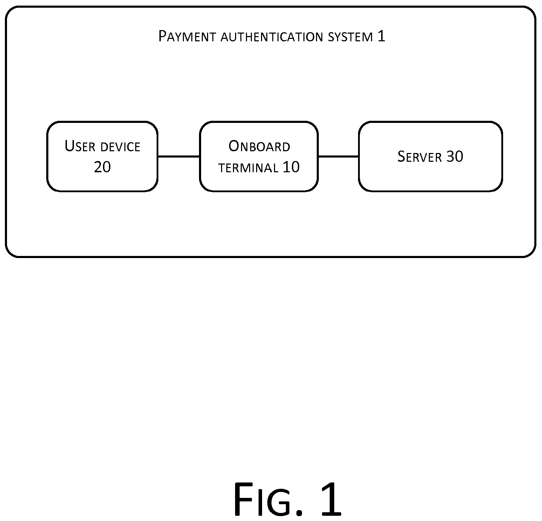

Referring to FIG. 1, a structural block diagram of a payment authentication system for an onboard terminal according to Embodiment 1 of the present application is shown. The payment authentication system 1 for an onboard terminal in this embodiment includes an onboard terminal 10, a user device 20 and a server 30.

Here, the onboard terminal 10 refers to a terminal device mounted on a vehicle, which has a function of connecting to the Internet, has a network connection relationship with the server 30, and establishes a communication connection relationship with the user device 20. It should be further noted that the "vehicle" as referred to here includes, but is not limited to, internal combustion engine vehicles or motorcycles, electric vehicles or motorcycles, electric bicycles, electric balance vehicles, remote-controlled vehicles, small aircrafts (e.g., unmanned aircrafts, small manned aircrafts, remote-controlled aircrafts), and various variations. Correspondingly, an onboard instruction input device, an onboard processor and an onboard display device in the vehicle refer to a related input device, a related processor and a related display device that are carried in the corresponding vehicle. In other words, "onboard" may be simply understood as the meaning of being carried in the vehicle.

The user device 20 is a mobile device that has a communication connection relationship with the onboard terminal 10. It should be pointed out that the communication connection may be a typical Bluetooth communication connection, and may also be another near field communication connection, e.g., a WIFI connection, an NFC connection, an infrared connection, or the like. It is conceivable that all manners having near field communication connections are appropriate for the present application. In addition, the user device 20 needs to have a storage module, that is, it needs to have a storage function. Typically, the user device 20 may include a smart phone, a tablet computer, a Bluetooth headset having a storage function, or the like.

The server 30 corresponds to an application program installed on the onboard terminal 20. If a shopping application "TMALL" is installed on the onboard terminal 20, the server 30 corresponds to a backend user server of TMALL. It should be noted that the server 30 has a database for storing user information.

At present, payment authentication mainly includes transaction password, fingerprint identification, SMS verification code, OTP token, and so on. The transaction password authentication is that a user provides a transaction password to a server when registering in a payment application. The user manually enters the transaction password each time payment is made, and a server terminal compares the transaction password to complete user authentication. The transaction password is a user authentication manner used more frequently at present. At present, the fingerprint identification is mainly used for payment authentication on mobile terminals. A user registers fingerprint information on a mobile device that supports fingerprint identification. After a payment application enables a fingerprint verification function, the user enters the fingerprint information through a fingerprint identification device each time payment is made, and the payment application sends the fingerprint information to a local trusted environment and compares the fingerprint information with a fingerprint template stored in the trusted environment to realize the authentication. The SMS verification code adopts a manner of one-time pad, and sends to a server terminal, via a SMS, a verification code generated by the server terminal each time a client terminal initiates a transaction request. After subjectively identifying the verification code, the user enters the verification code into the payment application, and the payment application sends the verification code to the server terminal for comparison to complete user authentication. The OTP token adopts a manner of one-time pad, and sends to a server terminal, via an OTP hardware device or application program, a verification code generated by the server terminal each time a client terminal initiates a transaction request. After subjectively identifying the verification code, the user enters the verification code into the payment application, and the payment application sends the verification code to the server terminal for comparison to complete user authentication.

However, several existing major identity authentication methods, such as transaction password, fingerprint identification, SMS verification code and OTP token, have been widely applied in the process of payment at PC terminals and mobile terminals. However, the payment at onboard terminals is different from the payment at the PC terminals and the mobile terminals in that: the transaction password, the SMS verification code, the OTP token and other identity authentication methods require the user to interact with payment terminals complicatedly and require the user to identify and input identity authentication information, which will attract too much attention from the driver for an onboard payment scenario, leading to dangerous driving. The fingerprint identification method does not require a driver to identify and input the identity authentication information, and only requires the user to touch the fingerprint identification device with a finger. However, the scenario of the onboard terminal is different from the scenario of the mobile terminal in that: the onboard terminal does not need to carry out user identity authentication frequently, and thus it does not need a fingerprint identification device. At present, the onboard terminal does not carry any fingerprint identification device. That is, the existing payment authentication method is not suitable for onboard terminals to carry out payment services.

However, in the existing Bluetooth payment certification system and method for a Bluetooth headset and mobile phone, a Bluetooth payment certification module sends an instruction signal to the Bluetooth headset through a Bluetooth communication interface. An identification processor obtains the instruction signal and performs identification processing. If the instruction signal is an instruction of acquiring a headset ID, the identification processor obtains the headset ID from a memory and transmits the headset ID to a Bluetooth payment certification module. Such an authentication process also has the following security risk: in the data transmitted, the Bluetooth headset ID is transmitted in a plaintext manner and the transmission content is not signed, and information has a risk of being stolen and tampered in the transmission process. At present, it is not found that the Bluetooth headset has a secure storage unit of a trusted environment. Therefore, the existing Bluetooth headset device cannot guarantee secure storage of an issued certificate without adding a trusted environment, and there is a risk that the digital certificate will be stolen.

In short, the existing mobile payment technology, especially the mobile payment technology applied to onboard terminals has the problem of poor payment security.

According to the present application, a user device identifier and a user identifier are acquired, the user device identifier and the user identifier are encrypted on an onboard terminal, an encrypted file is transmitted to a server, the encrypted file is decrypted in the server to generate a private key certificate of the user device and establish a binding relationship between the user device identifier and the user identifier, the private key certificate is encrypted and then transmitted to the onboard terminal and is decrypted on the onboard terminal, and the decrypted private key certificate is stored in a trusted environment of a Bluetooth device. Payment certification information including the user device identifier and the user identifier is encrypted using the private key certificate, and the encrypted user device identifier and the encrypted user identifier are sent to the server, so that the server verifies whether there is a binding relationship between the user device identifier and the user identifier and then performs payment processing, which solves the problem of a complicated payment process and poor payment security in an existing mobile payment technology applied to onboard terminals. All files are transmitted in an encrypted manner in the process of acquiring the private key certificate, which improves the security of payment authentication. In the payment process of the onboard terminal, it is unnecessary for a motor vehicle driver to perform excessive operations, and the payment process is simple, thus guaranteeing the driver's safety and improving user's payment experience.

The above embodiment simply introduces the onboard terminal 10, the user device 20 and the server 30 from the level of the payment authentication system for an onboard terminal. The following embodiments (Embodiment 2, Embodiment 3 and Embodiment 4) describe modular structures and execution methods of the onboard terminal 10, the user device 20 and the server 30 in detail respectively.

### Embodiment 2

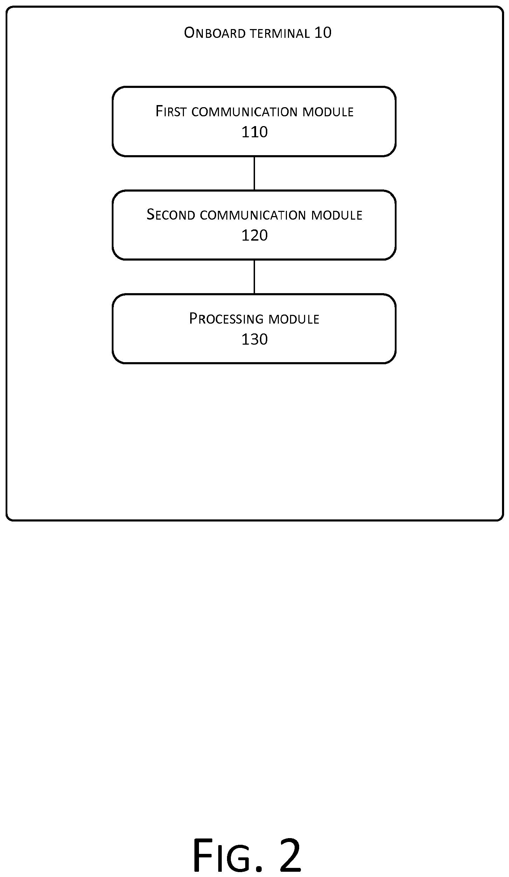

Referring to FIG. 2, a structural block diagram of an onboard terminal for onboard terminal payment authentication according to Embodiment 2 of the present application is shown. The onboard terminal 10 in this embodiment includes a first communication module 110, a second communication module 120, and a processing module 130.

The first communication module 110 is configured to receive a payment authentication request sent by a server, the payment authentication request including a user identifier.

The second communication module 120 is configured to forward the payment authentication request to a user device having an established communication connection; and receive encrypted payment certification information responded by the user device, the encrypted payment certification information including the user identifier and a user device identifier.

The first communication module 110 is further configured to send the encrypted payment certification information to the server; and receive a certification result sent by the server, the certification result indicating whether there is a binding relationship between the user identifier and the user device identifier.

The processing module 130 is configured to perform payment processing according to the certification result.

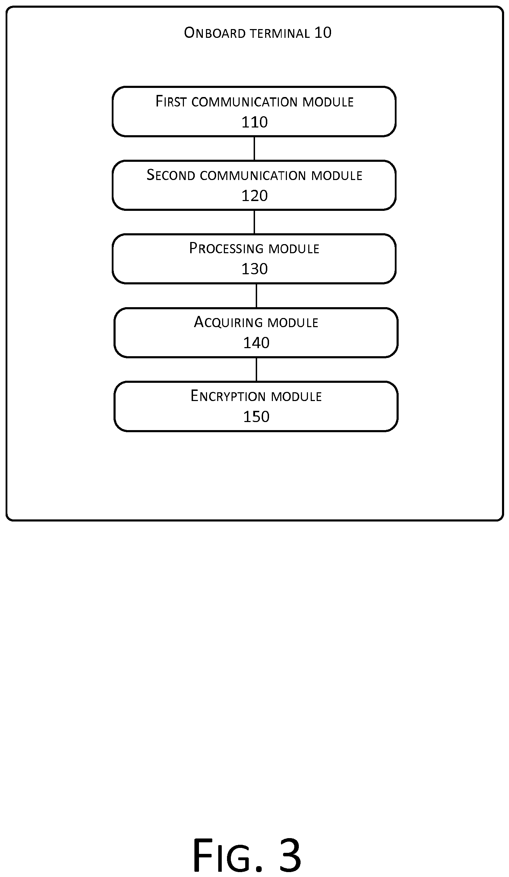

In another preferred embodiment of the present application, referring to FIG. 3, another structural block diagram of an onboard terminal for onboard terminal payment authentication according to Embodiment 2 of the present application is shown. The onboard terminal 10 further includes an acquiring module 140 and an encryption module 150.

The acquiring module 140 is configured to acquire the user device identifier.

The encryption module 150 is configured to encrypt the user device identifier and the user identifier.

The first communication module 110 is further configured to send the encrypted user device identifier and the encrypted user identifier to the server, so that the server establishes a binding relationship between the user device identifier and the user identifier.

In addition, the acquiring module 140 is specifically configured to send a binding request to the user device through the second communication module 120; and
receive, through the second communication module 120, a binding response sent by the user device, the binding response including the user device identifier.

Moreover, the encrypted payment certification information is obtained by the user device by encrypting payment certification information using a private key certificate, wherein the payment certification information is generated by the user device in response to the payment authentication request.

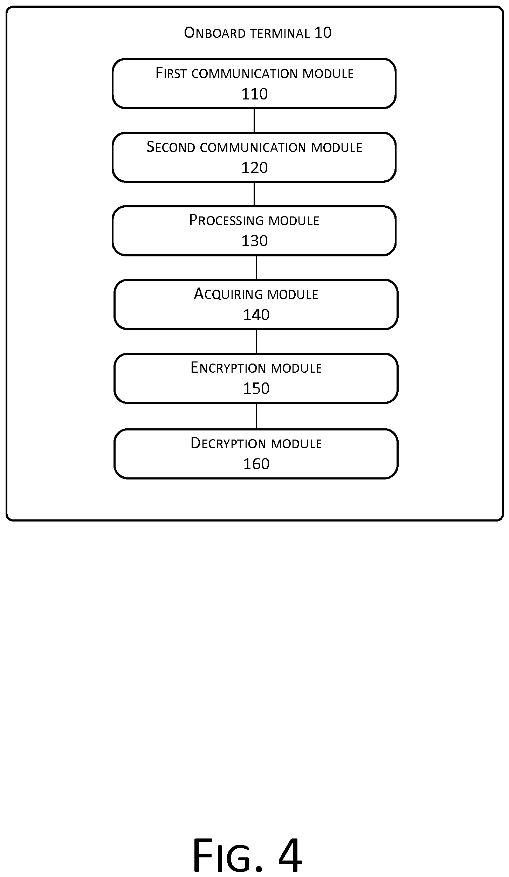

In another preferred embodiment of the present application, referring to FIG. 4, still another structural block diagram of an onboard terminal for onboard terminal payment authentication according to Embodiment 2 of the present application is shown. The first communication module 110 is further configured to receive the private key certificate encrypted and sent by the server, the private key certificate being generated by the server according to the user device identifier and the user identifier.

The onboard terminal 10 further includes a decryption module 160. The decryption module 160 is configured to obtain the private key certificate by decryption.

The second communication module 120 is further configured to send the private key certificate to the user device.

The above is an apparatus embodiment of an onboard terminal for onboard terminal payment authentication. The onboard terminal is further described in the following in combination with the process embodiment that may be performed at the onboard terminal 10.

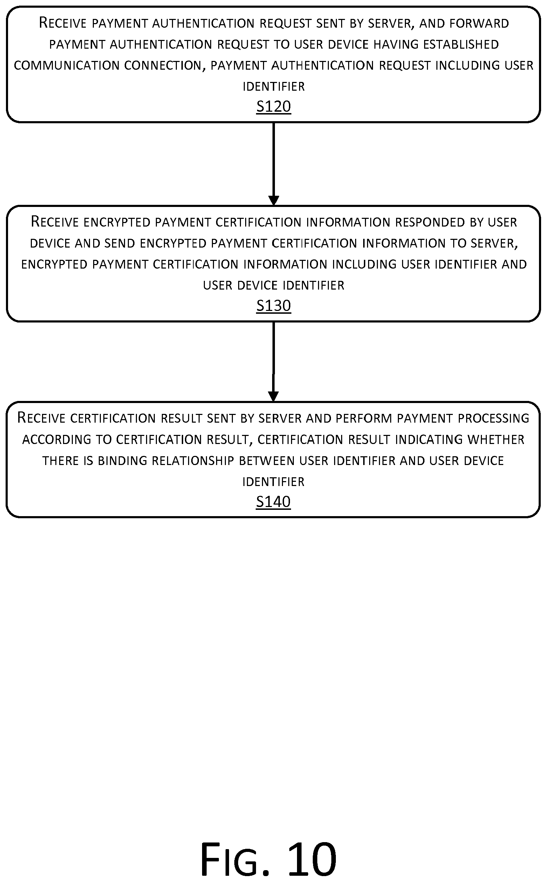

Referring to FIG. 10 to FIG. 12, method flowcharts of a payment authentication method for an onboard terminal performed at the onboard terminal 10 according to this embodiment are shown respectively.

Referring to FIG. 10, the payment authentication method that is performed by the onboard terminal 10 includes the following steps:
Step S120: A payment authentication request sent by a server is received, and the payment authentication request is forwarded to a user device having an established communication connection, the payment authentication request including a user identifier.
Step S130: Encrypted payment certification information responded by the user device is received and sent to the server, the encrypted payment certification information including the user identifier and a user device identifier.
Step S140: A certification result sent by the server is received and payment processing is performed according to the certification result, the certification result indicating whether there is a binding relationship between the user identifier and the user device identifier.

Specifically, in step 120, the first communication module 110 receives a payment authentication request sent by the server, and forwards the payment authentication request through the second communication module 120 to a user device having an established communication connection. The payment authentication request includes a user identifier. Here, prior to step 120, the onboard terminal 10 needs to call an Application Program Interface (API) of an application (such as TMALL described above) installed on the onboard terminal 10 to acquire a user identifier, i.e., a user ID, that is logged in to the application. Then, a payment transaction request is sent to the server through the onboard terminal 10, that is, information of the transaction request and the user identifier are sent to the server. The server needs to confirm the information of the transaction request when receiving the information of the transaction request and the user identifier, and after confirmation, the server initiates a payment authentication request to the onboard terminal 10. That is, the payment authentication request certainly includes the user identifier. In addition, the manner of sending a payment transaction request to the server through the onboard terminal 10 may be obtained by a user touching a man-machine interaction interface of the onboard terminal 10 or obtained in another man-machine interaction manner, such as collecting a user interaction instruction by voice.

After the onboard terminal 10 receives the payment authentication request, first of all, it needs to be determined whether the user device has been connected to the onboard terminal 10. If the user device has been connected to the onboard terminal 10, the second communication module 120 forwards the payment authentication request to the user device. If the user device has not been connected to the onboard terminal 10, a binding connection request is sent to the user device and the user device is connected. After the user device is connected, the second communication module 120 forwards the payment authentication request to the user device. So far, step S120 has been completed.

Following step S120 as described above, in step S130, first of all, the second communication module 120 receives encrypted payment certification information responded by the user device. The encrypted payment certification information includes the user identifier and a user device identifier. Then, the first communication module 110 sends the encrypted payment certification information to the server.

Here, the encrypted payment certification information is obtained by the user device by encrypting payment certification information using a private key certificate, wherein the payment certification information is generated by the user device in response to the payment authentication request. It should be noted that a private key certificate for encrypting the payment certification information is stored in the user device in the above situation In addition, the specific method for generating the payment certification information by the user device in response to the payment authentication request is: first acquiring information of the user identifier in the payment authentication request, or acquiring information of the transaction request; then calling a driver of the user device to acquire the user device identifier; and finally integrating the user device identifier and the user identifier to obtain the payment certification information. It is apparent that the payment certification information includes the user device identifier and the user identifier, and the encrypted payment certification information is obtained by encrypting the payment certification information using the private key certificate; therefore the encrypted payment certification information certainly includes the user identifier and the user device identifier.

After acquiring the encrypted payment certification information, the user device sends the encrypted payment certification information to the onboard terminal 10. That is, the second communication module 120 receives encrypted payment certification information responded by the user device. Then, the first communication module 110 sends the encrypted payment certification information to the server. That is, step S130 is completed.

Following step S130 as described above, in step S140, first of all, the first communication module 110 receives a certification result sent by the server; and then, the processing module 130 performs payment processing according to the certification result. Here, the certification result indicates whether there is a binding relationship between the user identifier and the user device identifier, that is, whether the user identifier and the user device identifier are bound and kept on record in the server. The "bound and kept on record" means that the user identifier and the user device identifier have a binding relationship and have been kept on record in the server network.

Specifically, after receiving the encrypted payment certification information, first of all, the server needs to decrypt the encrypted payment certification information using a public key of the private key certificate, and acquire the user identifier and the user device identifier. It should be pointed out that the public key of the private key certificate is stored in the server as described above. Then, the server verifies whether there is a binding relationship between the user identifier and the user device identifier. Specifically, the user identifier and the user device identifier may be mapped and compared with user identifiers and user device identifiers that have been kept on record in a database of the server. If the user identifier and the user device identifier exist in the database of the server, and the user identifier and the user device identifier are also mapped in pair, it indicates that there is a binding relationship between the user identifier and the user device identifier. If the user identifier and the user device identifier do not exist in the database of the server, or the user identifier and the user device identifier are not mapped in pair, it indicates that there is no binding relationship between the user identifier and the user device identifier.

When there is no binding relationship between the user identifier and the user device identifier, the server sends a result of failed certification. The first communication module 110 receives the result of failed certification sent by the server, and the processing module 130 refuses to perform payment processing according to the result of failed certification, that is, the authentication fails.

When there is a binding relationship between the user identifier and the user device identifier, the server sends a result of successful certification. The first communication module 110 receives the result of successful certification sent by the server, and the processing module 130 allows performing payment processing according to the result of successful certification, that is, the authentication is successful. So far, step S140 has been completed.

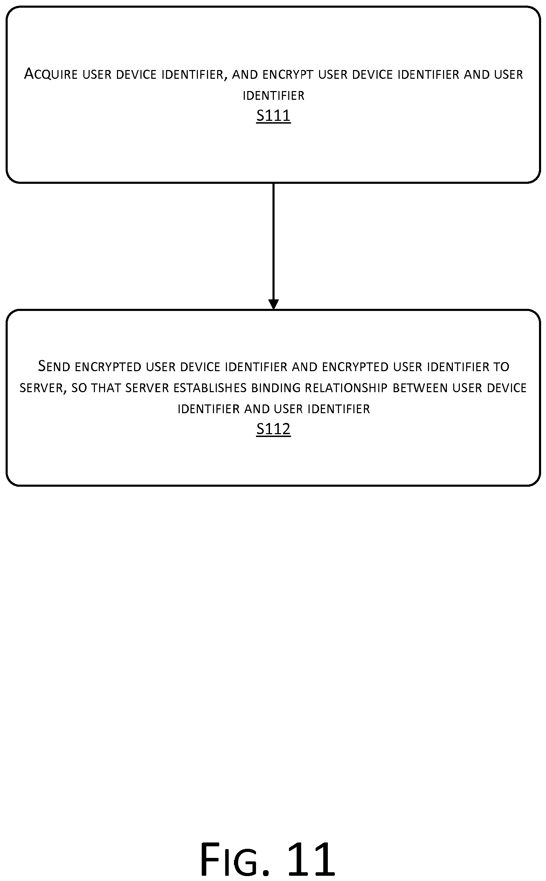

The above describes the situation where a binding relationship between the user device identifier and the user identifier is stored in the server, that is, there is no need to establish a binding relationship between the user device identifier and the user identifier in the server in the above authentication process. The situation where a binding relationship between the user device identifier and the user identifier needs to be established in the server in the authentication process is described in detail below:
Referring to FIG. 11, the payment authentication method for the onboard terminal 10 further includes the following steps:
Step S111: The user device identifier is acquired, and the user device identifier and the user identifier are encrypted.
Step S112: The encrypted user device identifier and the encrypted user identifier are sent to the server, so that the server establishes a binding relationship between the user device identifier and the user identifier.

In step Sill, first of all, the acquiring module 140 acquires the user device identifier; and then the encryption module 150 encrypts the user device identifier and the user identifier.

Here, the method for acquiring the user device identifier by the acquiring module 140 includes: first of all, sending a binding request to the user device; and then receiving a binding response sent by the user device, the binding response including the user device identifier. Specifically, first of all, the acquiring module 140 is specifically configured to send a binding request to the user device through the second communication module 120. After receiving the binding request, the user device is bound to the onboard terminal 10, acquires the user device identifier by calling a driver of the user device, and sends a binding response to the onboard terminal 10. The binding response includes the user device identifier. Then, the acquiring module receives, through the second communication module 120, the binding response sent by the user device, that is, acquires the user device identifier.

After the user device identifier is acquired, the encryption module 150 encrypts the user device identifier and the user identifier. Here, the encryption module 150 encrypts the user device identifier and the user identifier using a public key of the server pre-stored in the onboard terminal 10. The public key of the server may be pre-stored when the onboard terminal leaves the factory. So far, step Sill has been completed.

Following step Sill as described above, in step S112, the first communication module 110 sends the encrypted user device identifier and the encrypted user identifier to the server. Here, the first communication module 110 sends the encrypted user device identifier and the encrypted user identifier to the server such that the server establishes a binding relationship between the user device identifier and the user identifier. Specifically, after receiving the encrypted user device identifier and the encrypted user identifier, the server needs to call a private key of the server to decrypt the encrypted user device identifier and the encrypted user identifier to acquire the user device identifier and the user identifier, bind the user device identifier to the user identifier and store the user device identifier and the user identifier in the server. That is, the server is made to establish a binding relationship between the user device identifier and the user identifier. So far, step S112 has been completed.

The above points out that the encrypted payment certification information is obtained by the user device by encrypting payment certification information using a private key certificate, wherein the payment certification information is generated by the user device in response to the payment authentication request.

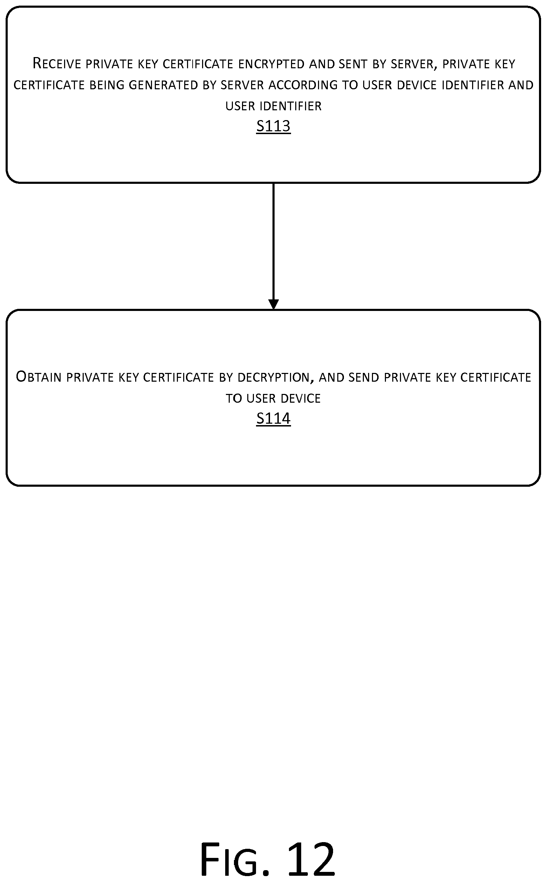

As described previously, a private key certificate for encrypting the payment certification information is stored in the user device in the above situation. As for the situation where the private key certificate for encrypting the payment certification information is not stored in the user device, the private key certificate needs to be acquired at first. A method for acquiring the private key certificate is described in detail below:
Referring to FIG. 12, after the step of sending the encrypted user device identifier and the encrypted user identifier to the server, the method further includes the following steps:
Step S113: The private key certificate encrypted and sent by the server is received, the private key certificate being generated by the server according to the user device identifier and the user identifier.
Step S114: The private key certificate is obtained by decryption, and the private key certificate is sent to the user device.

In step S113, the first communication module 110 receives the private key certificate encrypted and sent by the server, the private key certificate being generated by the server according to the user device identifier and the user identifier. Specifically, a private key certificate of the user device is generated after the server acquires the user device identifier and the user identifier, and the private key certificate of the user device is stored in the server for decryption. In addition, the private key certificate of the user device is encrypted using a public key of the onboard terminal 10 when leaving the factory, and then the encrypted private key certificate of the user device is sent to the onboard terminal 10. Here, the public key of the onboard terminal 10 when leaving the factory may be obtained by the server by accessing the onboard terminal 10 via a network connection. That is, the server sends the encrypted private key certificate of the user device to the onboard terminal 10, and the first communication module 110 receives the private key certificate encrypted and sent by the server. So far, step S113 has been completed.

Following step S113 as described above, in step S114, first of all, the decryption module 160 is configured to obtain the private key certificate by decryption; and then the second communication module 120 sends the private key certificate to the user device.

Specifically, the decryption module 160 decrypts the encrypted private key certificate of the user device using a private key stored when the onboard terminal 10 leaves the factory, and acquires the private key certificate of the user device. Then, the second communication module 120 sends the private key certificate to the user device. After receiving the private key certificate, the user device stores the private key certificate in a trusted environment of the user device. The trusted environment refers to a readable storage space. The user encrypts the payment certification information using the private key certificate stored in the trusted environment, to obtain the encrypted payment certification information. So far, step 114 has been completed.

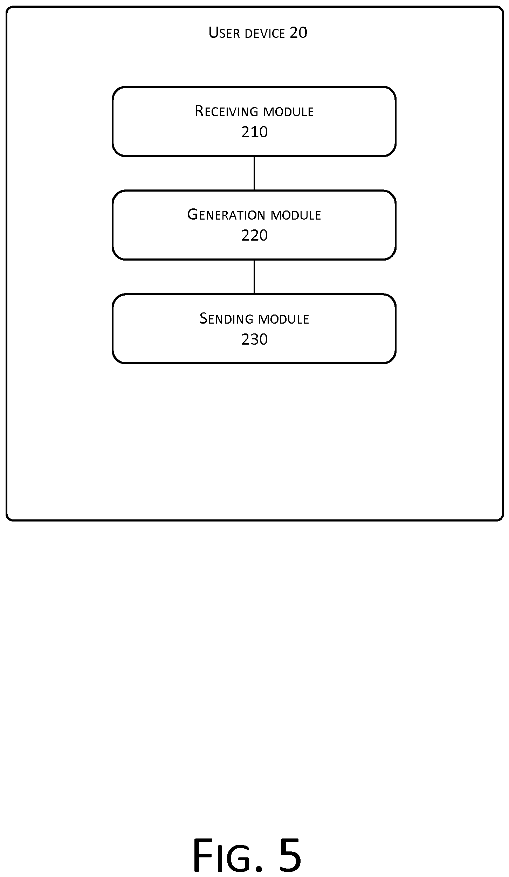

Referring to FIG. 5, a structural block diagram of a user device for onboard terminal payment authentication according to another example is shown. The user device 20 in this embodiment includes a receiving module 210, a generation module 220 and a sending module 230.

The receiving module 210 is configured to receive a payment authentication request sent by an onboard terminal having an established communication connection, the payment authentication request including a user identifier.

The generation module 220 is configured to generate encrypted payment certification information in response to the payment authentication request, the encrypted payment certification information including the user identifier and a user device identifier.

The sending module 230 is configured to send the encrypted payment certification information to a server through an onboard terminal, so that the server certifies whether there is a binding relationship between the user identifier and the user device identifier.

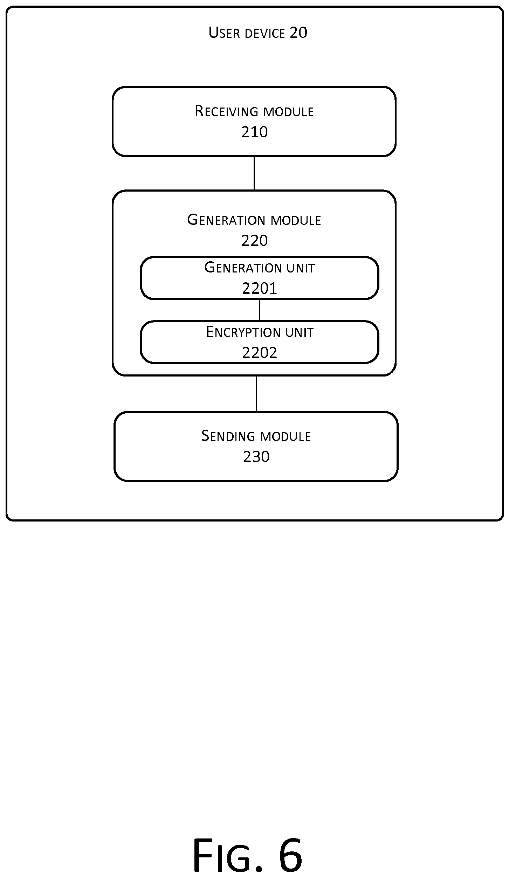

Referring to FIG. 6, another structural block diagram of an onboard terminal for onboard terminal payment authentication is shown. The generation module 220 further includes a generation unit 2201 and an encryption unit 2202.

The generation unit 2201 is configured to generate payment certification information in response to the payment authentication request.

The encryption unit 2202 is configured to encrypt the payment certification information using a private key certificate to generate the encrypted payment certification information.

The receiving module 210 is further configured to receive a binding request sent by the onboard terminal;
the sending module 230 is further configured to send the user device identifier to the onboard terminal in response to the binding request to allow the onboard terminal to send the encrypted user device identifier and the encrypted user identifier to the server, so that the server decrypts the encrypted user device identifier and the encrypted user identifier to generate the private key certificate and sends the encrypted private key certificate to the onboard terminal; and
the receiving module 210 is further configured to receive the decrypted private key certificate sent by the onboard terminal.

An apparatus of a user device 20 for onboard terminal payment authentication is described above. The user device for onboard terminal payment authentication is further described in the following in combination with the process that may be performed at the user device 20.

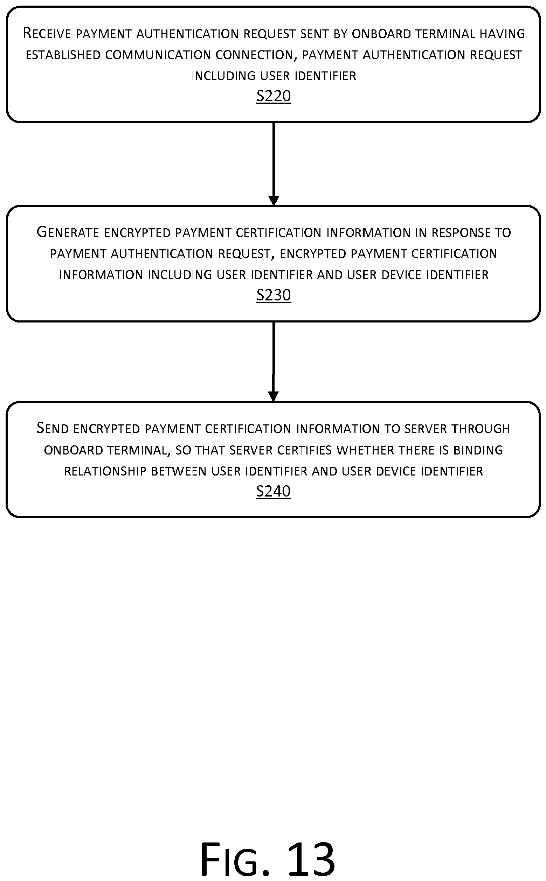

Referring to FIG. 13 to FIG. 15, method flowcharts of a payment authentication method for an onboard terminal performed at the user device 20 are shown respectively.

Referring to FIG. 13, the payment authentication method that may be performed by the user device 20 includes the following steps:
Step S220: A payment authentication request sent by an onboard terminal having an established communication connection is received, the payment authentication request including a user identifier.
Step S230: Encrypted payment certification information is generated in response to the payment authentication request, the encrypted payment certification information including the user identifier and a user device identifier.
Step S240: The encrypted payment certification information is sent to a server through an onboard terminal, so that the server certifies whether there is a binding relationship between the user identifier and the user device identifier.

Specifically, in step S220, the receiving module 210 receives the payment authentication request sent by the onboard terminal having an established communication connection, the payment authentication request including the user identifier. Here, the payment authentication request is sent by the onboard terminal. Reference may be made to Embodiment 2 as described above for the method for acquiring the payment authentication request by the onboard terminal, the details of which are not described here.

Following step S220 as described above, in step S230, the generation module 220 generates the encrypted payment certification information in response to the payment authentication request, the encrypted payment certification information including the user identifier and the user device identifier.

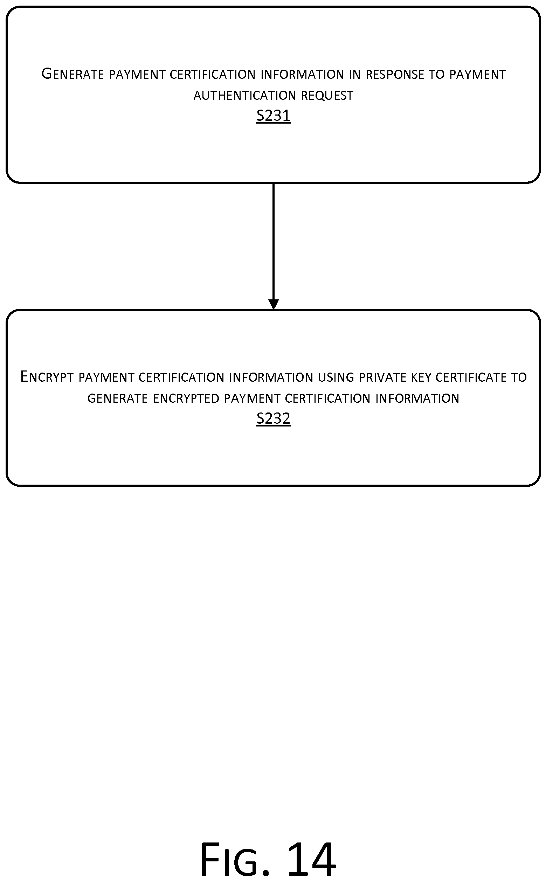

Specifically, referring to FIG. 14, step S230 includes the following steps:
Step S231: Payment certification information is generated in response to the payment authentication request.
Step S232: The payment certification information is encrypted using a private key certificate to generate encrypted payment certification information.

Specifically, the generation unit 2201 generates payment certification information in response to the payment authentication request.

The encryption unit 2202 encrypts the payment certification information using a private key certificate to generate encrypted payment certification information.

Here, the user device 20 first calls a device driver to acquire the user device identifier, and then encrypts the user identifier and the user device identifier using the private key certificate stored in the user device. Reference may be made to Embodiment 2 as described above for the specific method for generating payment certification information and the method for encrypting the payment certification information.

Following step S230 as described above, in step S240, the sending module 230 sends the encrypted payment certification information to the server through the onboard terminal, so that the server certificates whether there is a binding relationship between the user identifier and the user device identifier. Here, after acquiring the encrypted payment certification information, the user device 20 transmits the encrypted payment certification information to the server through the onboard terminal, so that the server certificates whether there is a binding relationship between the user identifier and the user device identifier. Reference may be made to Embodiment 2 as described above for the manner in which the server certificates whether there is a binding relationship between the user identifier and the user device identifier. The details of the manner are not described here.

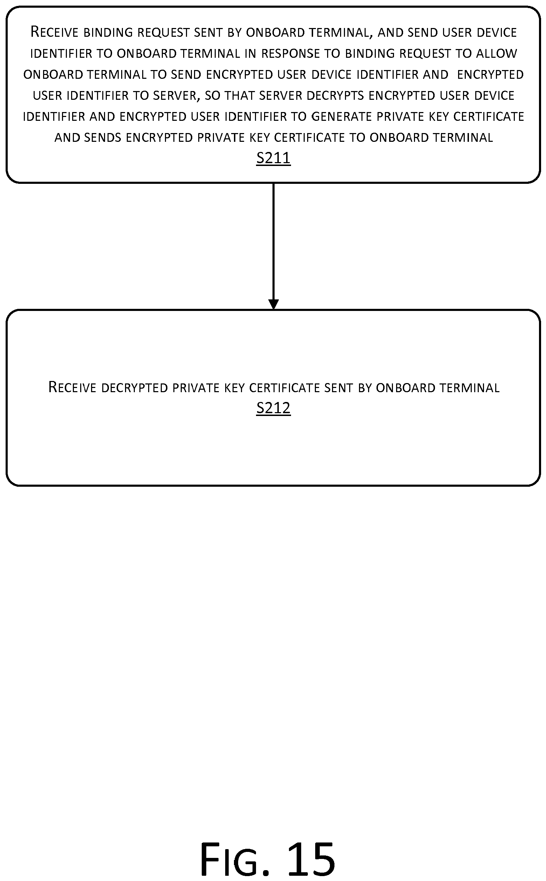

It is pointed out in the foregoing that the encrypted payment certification information is obtained by the user device 20 by encrypting the payment certification information using a private key certificate, wherein the payment certification information is generated by the user device in response to the payment authentication request. A private key certificate for encrypting the payment certification information is stored in the user device in the above situation. As for the situation where the private key certificate for encrypting the payment certification information is not stored in the user device, the private key certificate needs to be acquired at first. A method for acquiring the private key certificate is described in detail below:
Referring to FIG. 15, an example for acquiring the private key certificate by the user device 20 includes the following steps:
Step S211: A binding request sent by the onboard terminal is received, and the user device identifier is sent to the onboard terminal in response to the binding request to allow the onboard terminal to send the encrypted user device identifier and the encrypted user identifier to the server, so that the server decrypts the encrypted user device identifier and the encrypted user identifier to generate the private key certificate and sends the encrypted private key certificate to the onboard terminal.
Step S212: The decrypted private key certificate sent by the onboard terminal is received.

Specifically, in step S211, first of all, the receiving module 210 receives a binding request sent by the onboard terminal, and connects and binds the user device 20 to the onboard terminal 10.

Then, the sending module 230 sends the user device identifier to the onboard terminal in response to the binding request to allow the onboard terminal to send the encrypted user device identifier and the encrypted user identifier to the server, so that the server decrypts the encrypted user device identifier and the encrypted user identifier to generate the private key certificate and sends the encrypted private key certificate to the onboard terminal.

Following step S211 as described above, in step S212, the receiving module 210 receives the decrypted private key certificate sent by the onboard terminal 10. After the private key certificate is received, the private key certificate is stored in a trusted environment of the user device. The trusted environment refers to a readable storage space. The user encrypts the payment certification information using the private key certificate stored in the trusted environment, to obtain the encrypted payment certification information.

It should be noted that reference may be made to the method in Embodiment 2 for the method for acquiring the private key certificate of the user device, and reference may be made to the content in Embodiment 2 for any unclear content in this embodiment.

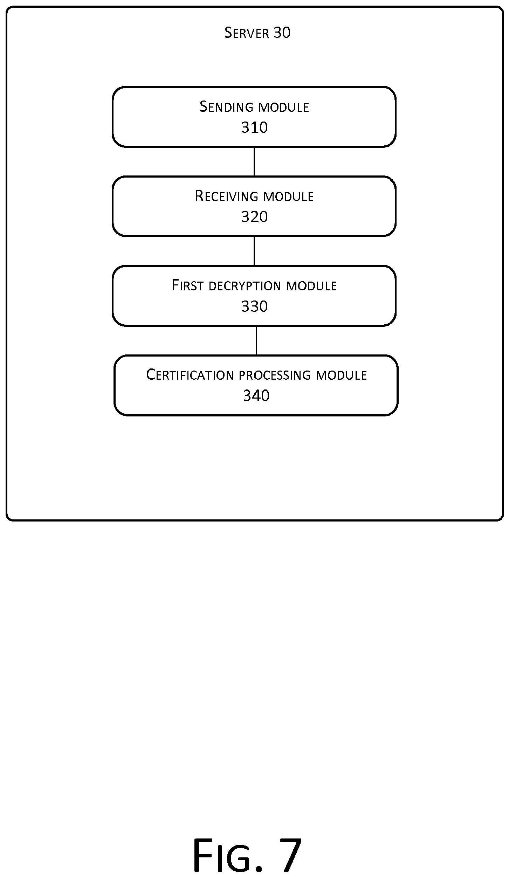

Referring to FIG. 7, a structural block diagram of a server for onboard terminal payment authentication is shown. The server 30 includes a sending module 310, a receiving module 320, a first decryption module 330 and a certification processing module 340.

The sending module 310 is configured to send a payment authentication request to a user device through an onboard terminal, the payment authentication request including a user identifier.

The receiving module 320 is configured to receive encrypted payment certification information sent by the user device through the onboard terminal, the encrypted payment certification information being generated in response to the payment authentication request and including the user identifier and a user device identifier.

The first decryption module 330 is configured to decrypt the encrypted payment certification information.

The certification processing module 340 is configured to certify whether there is a binding relationship between the user identifier and the user device identifier.

The sending module 310 is further configured to send the certification result to the onboard terminal.

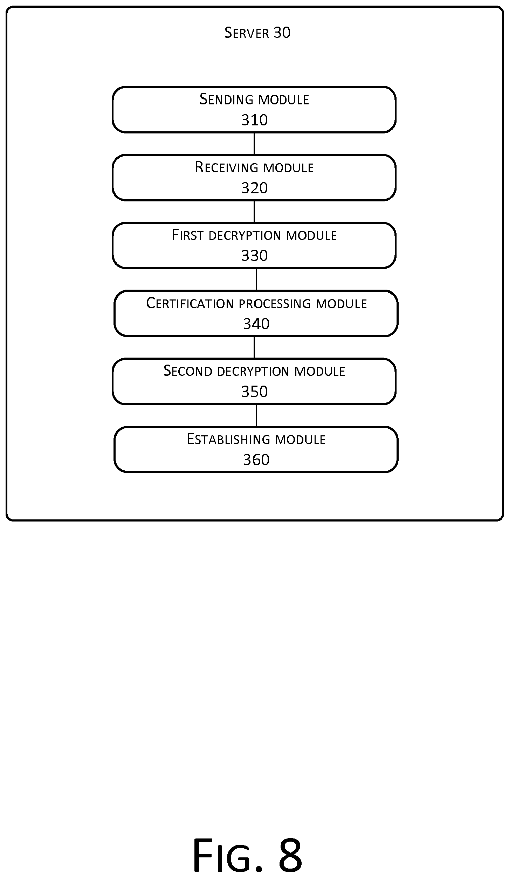

Referring to FIG. 8, another structural block diagram of a server for onboard terminal payment authentication is shown. The receiving module 320 is further configured to receive the encrypted user device identifier and the encrypted user identifier which are sent by the onboard terminal 10. The server 30 further includes a second decryption module 350 and an establishing module 360.

The second decryption module 350 is configured to decrypt the encrypted user device identifier and the encrypted user identifier.

The establishing module 360 is configured to establish a binding relationship between the user device identifier and the user identifier.

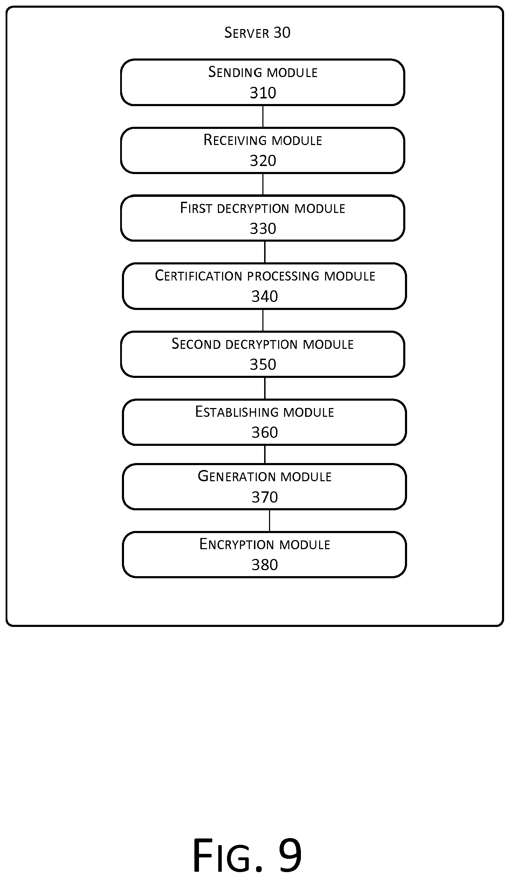

Moreover, referring to FIG. 9, still another structural block diagram of a server for onboard terminal payment authentication is shown. The server 30 further includes a generation module 370 and an encryption module 380.

The generation module 370 is configured to generate a private key certificate according to the user device identifier and the user identifier.

The encryption module 380 is configured to encrypt the private key certificate.

The sending module 310 is further configured to send the encrypted private key certificate to the onboard terminal, so that the onboard terminal obtains the private key certificate by decryption and sends the private key certificate to the user device.

The encrypted payment certification information is obtained by the user device by encrypting the payment certification information using a private key certificate, wherein the payment certification information is generated by the user device in response to the payment authentication request.

An apparatus of a server for onboard terminal payment authentication is described above. The server for onboard terminal payment authentication is further described in the following in combination with the process performed at the server 30.

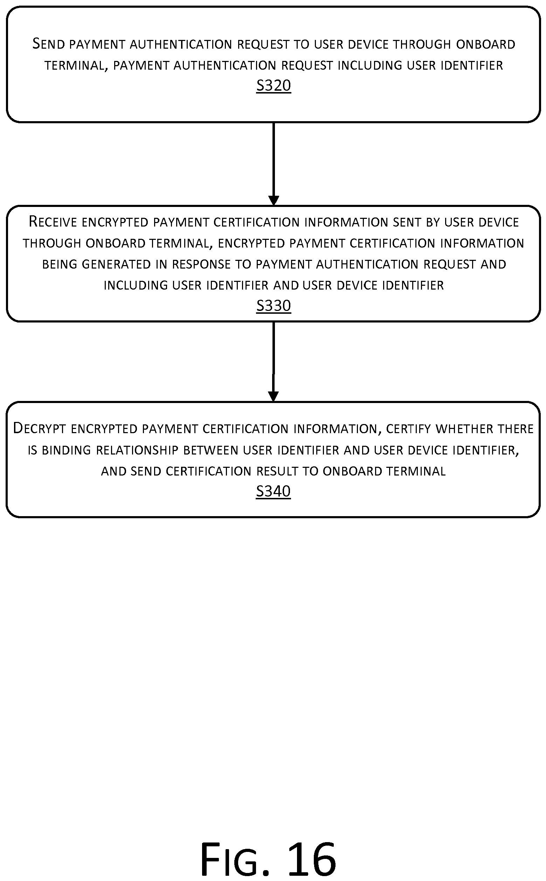

Referring to FIG. 16 to FIG. 18, method flowcharts of a payment authentication method for an onboard terminal performed at the server 30 are shown respectively.

Referring to FIG. 16, the payment authentication method that may be performed at the server 30 includes the following steps:
Step S320: A payment authentication request is sent to a user device through an onboard terminal, the payment authentication request including a user identifier.
Step S330: Encrypted payment certification information sent by the user device through the onboard terminal is received, the encrypted payment certification information being generated in response to the payment authentication request and including the user identifier and a user device identifier.
Step S340: The encrypted payment certification information is decrypted, it is certified whether there is a binding relationship between the user identifier and the user device identifier, and a certification result is sent to the onboard terminal.

Specifically, in step S320, the sending module 310 sends a payment authentication request to a user device through an onboard terminal, the payment authentication request including a user identifier. Here, the server 30 receives transaction information sent by the onboard terminal, confirms the transaction information, and generates a payment authentication request. Then, the sending module 310 sends the payment authentication request to a user device through the onboard terminal. It should be noted that the onboard terminal has a passthrough function in the process that the server transmits the payment authentication request to the user device.

Following step S320 as described above, in step S330, the receiving module 320 receives encrypted payment certification information sent by the user device through the onboard terminal, the encrypted payment certification information being generated in response to the payment authentication request and including the user identifier and a user device identifier. The encrypted payment certification information is obtained by the user device by encrypting the payment certification information using a private key certificate, wherein the payment certification information is generated by the user device in response to the payment authentication request. Specifically, after receiving the payment authentication request, the user device generates the payment certification information in response to the payment authentication request. Here, the payment authentication request only includes the user identifier, and the user device needs to call its own driver to acquire its own user device identifier, and then generate the payment certification information. That is, the payment certification information includes the user identifier and the user device identifier. After the payment certification information is acquired, a private key certificate stored in a trusted environment of the user device is called to encrypt the payment certification information, the encrypted payment certification information is acquired, and the encrypted payment certification information certainly includes the user identifier and the user device identifier. After acquiring the encrypted payment certification information, the user device first transmits the encrypted payment certification information to the onboard terminal, and then transmits the encrypted payment certification information to the server 30 through the onboard terminal. Here, the onboard terminal also has a passthrough function, that is, the receiving module 320 receives encrypted payment certification information sent by the user device through the onboard terminal, the encrypted payment certification information being generated in response to the payment authentication request. So far, step S330 has been completed.

Following step S330 as described above, in step S340, the first decryption module 330 decrypts the encrypted payment certification information. The certification processing module 340 certifies whether there is a binding relationship between the user identifier and the user device identifier. Specifically, after the server 30 receives the encrypted payment certification information, first of all, the first decryption module 330 decrypts the encrypted payment certification information. Here, a public key for decrypting the encrypted payment certification information is stored in the server 30. That is, the above description is based on a situation where a private key certificate of the user device is stored in the server 30. As for the situation where the private key certificate of the user device is not stored in the server 30, the specific method for acquiring the private key certificate in the server 30 will be given in the following. The first decryption module 330 decrypts the encrypted payment certification information to acquire the user identifier and the user device identifier in the encrypted payment certification information. After the user identifier and the user device identifier are acquired, the certification processing module 340 needs to certify a binding relationship between the user identifier and the user device identifier. Specifically, the user identifier and the user device identifier may be mapped and compared with user identifiers and user device identifiers that have been kept on record in a database of the server. If the user identifier and the user device identifier exist in the database of the server, and the user identifier and the user device identifier are also mapped in pair, it indicates that there is a binding relationship between the user identifier and the user device identifier. If the user identifier and the user device identifier does not exist in the database of the server, or the user identifier and the user device identifier are not mapped in pair, it indicates that there is no binding relationship between the user identifier and the user device identifier.

When there is no binding relationship between the user identifier and the user device identifier, the server sends a result of failed certification. The sending module 310 sends the result of failed certification to the onboard terminal, and the onboard terminal 10 refuses to perform payment processing according to the result of failed certification, that is, the authentication fails.

When there is a binding relationship between the user identifier and the user device identifier, the server sends a result of successful certification. The sending module 310 sends the result of successful certification to the onboard terminal, and the onboard terminal 10 allows performing payment processing according to the result of successful certification, that is, the authentication is successful. So far, step S340 has been completed.

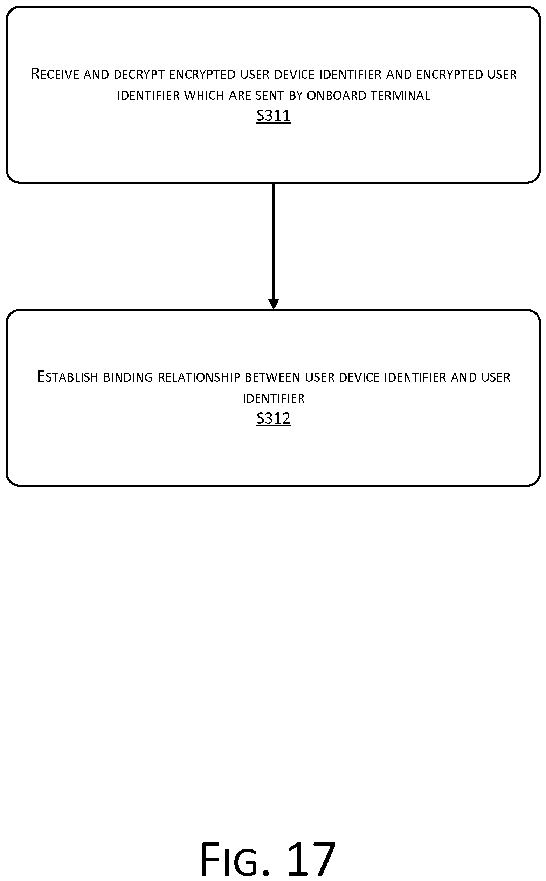

The above describes the situation where a binding relationship between the user device identifier and the user identifier is stored in the server, that is, there is no need to establish a binding relationship between the user device identifier and the user identifier in the server in the above authentication process. The situation where a binding relationship between the user device identifier and the user identifier needs to be established in the server in the authentication process is described in detail below:
Referring to FIG. 17, a payment authentication method for an onboard terminal performed at the server 30 further includes the following steps:
Step S311: The encrypted user device identifier and the encrypted user identifier which are sent by the onboard terminal are received and decrypted.
Step S312: A binding relationship between the user device identifier and the user identifier is established.

Specifically, in step S311, the second decryption module 350 decrypts the encrypted user device identifier and the encrypted user identifier. Here, the user device binds to the onboard terminal to transmit its own user device identifier to the onboard terminal. The onboard terminal calls an application API to acquire a user identifier, and encrypts the user identifier and the user device identifier using a public key of the server 30 pre-stored in the onboard terminal 10. The public key of the server 30 may be preset when the onboard terminal 10 leaves the factory. After receiving the encrypted user device identifier and the encrypted user identifier which are sent by the onboard terminal 10, the server 30 decrypts the encrypted user device identifier and the encrypted user identifier using its own private key, and acquires the user device identifier and the user identifier. So far, step S311 has been completed.

Following step S311 as described above, in step S312, the establishing module 360 establishes a binding relationship between the user device identifier and the user identifier. Specifically, the establishing module 360 makes a backup at the server 30 using the user device identifier and the user identifier acquired by the decryption module 350, that is, establishes a binding relationship between the user device identifier and the user identifier in the server 30. So far, step S312 has been completed.

The process that the server 30 establishes a binding relationship between the user device identifier and the user identifier is described above.

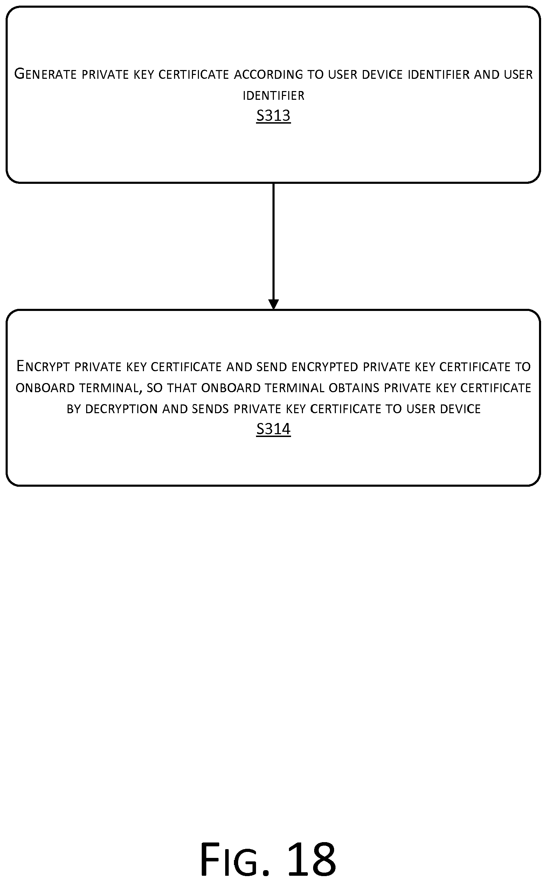

In addition, referring to FIG. 18, after step S312 of establishing a binding relationship between the user device identifier and the user identifier, the method further includes the following steps:
Step S313: A private key certificate is generated according to the user device identifier and the user identifier.
Step S314: The private key certificate is encrypted and sent to the onboard terminal, so that the onboard terminal obtains the private key certificate by decryption and sends the private key certificate to the user device.

Specifically, in step S313, the generation module 370 generates a private key certificate according to the user device identifier and the user identifier. Specifically, after the user device identifier and the user identifier are acquired, the generation module 370 generates a private key certificate using the user device identifier and the user identifier, that is, the private key certificate stored in the user device 10 and the server 30. After the private key certificate is acquired, the private key certificate first needs to be stored and backed up in the server 30 for decryption, and then the private key certificate needs to be transmitted to the user device through the onboard terminal (as in the following step). So far, step S313 has been completed.

Following step S313 as described above, in step S314, first of all, the encryption module 380 encrypts the private key certificate. Then, the sending module 310 sends the encrypted private key certificate to the onboard terminal, so that the onboard terminal obtains the private key certificate by decryption, and sends the private key certificate to the user device. Specifically, the encryption module 380 encrypts the private key certificate using a public key of the onboard terminal 10. Here, the public key of the onboard terminal 10 may be acquired by the server 30 by accessing the onboard terminal 10 via a communication network.

After the private key certificate is encrypted, the sending module 310 sends the encrypted private key certificate to the onboard terminal, so that the onboard terminal obtains the private key certificate by decryption, and sends the private key certificate to the user device. Specifically, the sending module 310 sends the encrypted private key certificate to the onboard terminal, and after acquiring the encrypted private key certificate, the onboard terminal 10 decrypts the encrypted private key certificate using a private key corresponding to the public key of the onboard terminal 10 to acquire the private key certificate, and then sends the private key certificate to the user device to allow the user device to store the private key certificate in a trusted environment for use in encryption of the payment certification information. So far, step S314 has been completed.

The process that the server 30 acquires the private key certificate is described above.

It should be noted that reference may be made to the method in Embodiment 2 for the method for acquiring the private key certificate of the user device, and reference may be made to the content in Embodiment 2 for any unclear content in this embodiment.

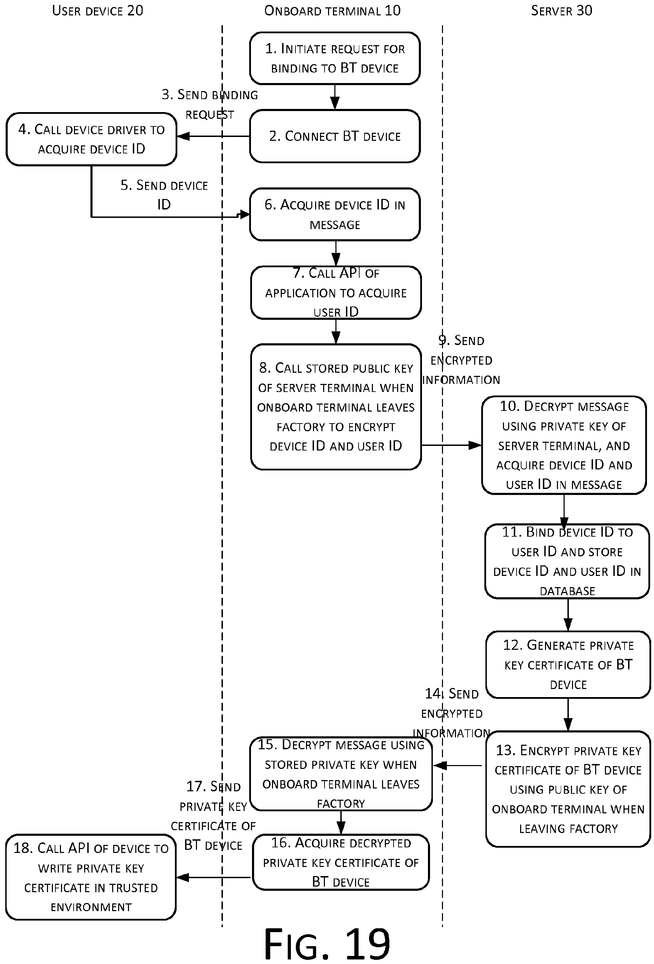

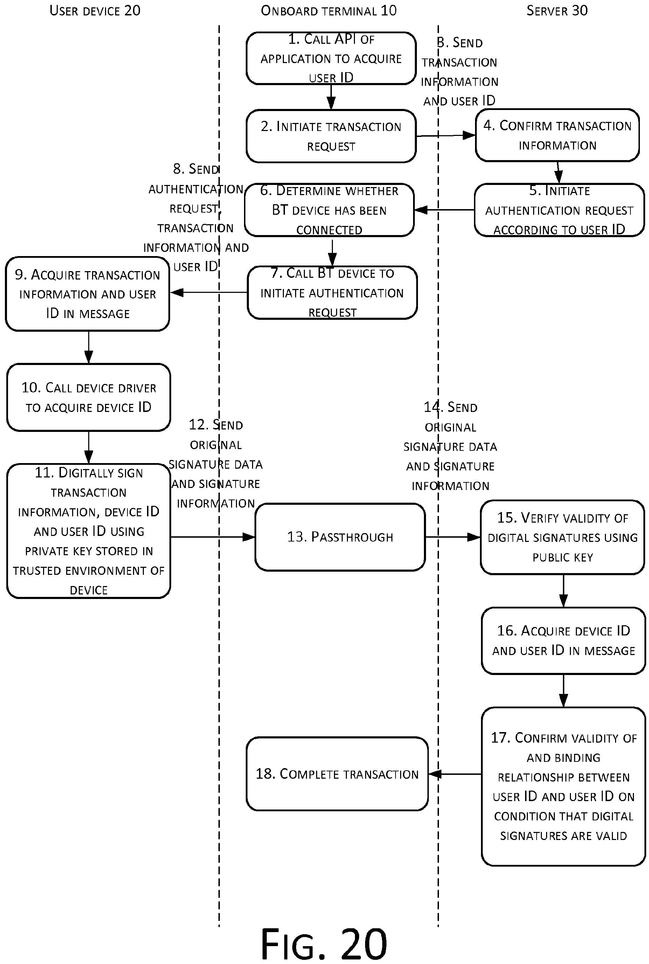

Referring to FIG. 19 and FIG. 20, operational schematic diagrams of a payment authentication system are shown respectively.

FIG. 19 is an operational schematic diagram showing that the server 30 establishes the user device identifier and the user identifier and acquires a private key certificate. FIG. 20 is an operational schematic diagram of authentication on a payment transaction.

First of all, as shown in FIG. 19, the payment authentication system 1 may perform the following operation steps:
1. An onboard terminal 10 initiates a request for binding to a user device 20.
2. The onboard terminal 10 calls an API interface of the user device 20 to connect the user device 20.
3. The onboard terminal 10 sends a binding request to the user device 20.
4. The user device 20 calls a device driver to acquire its own device ID.
5. The user device 20 sends the device ID to the onboard terminal 10.
6. The onboard terminal 10 acquires a device ID in a message.
7. The onboard terminal 10 calls an application API interface to acquire a user ID logged in to an application.
8. The onboard terminal 10 calls a public key of a server 30 stored when leaving the factory to encrypt the device ID and the user ID.
9. The onboard terminal 10 sends encrypted information to the server 30.
10. The server 30 decrypts the message using a private key, and acquires the device ID and the user ID in the message.
11. The server 30 stores a binding relationship between the device ID and the user ID in a database.
12. The server 30 generates a private key certificate of the user device 20.
13. The server 30 encrypts the private key certificate of the user device 20 using public key data in a public-private key pair written when the onboard terminal 10 leaves the factory.
14. The server 30 sends the encrypted information to the onboard terminal 10.
15. The onboard terminal 10 decrypts the message using a private key stored when leaving the factory.
16. The onboard terminal 10 acquires the private key certificate of the user device 20 in the decrypted message.
17. The onboard terminal 10 sends the private key certificate of the user device 20 to the user device 20 through an API interface of the user device 20.
18. The user device 20 calls the API interface of the device to write the private key certificate in a trusted environment of the device, to bind the user device 20 to the onboard terminal 10 and write the private key certificate of the user device 20.

By performing the above operations, the payment authentication system 1 acquires the private key certificate of the user device 20, and stores the private key certificate of the user device 20 in a trusted environment of a storage module of the user device 20.

Secondly, as shown in FIG. 20, the payment authentication system 1 may further perform the following operation steps:
1. The onboard terminal 10 calls an API of an application to acquire a user ID through which a user logs in to the application.
2. The onboard terminal 10 initiates a transaction request according to order information of the user.
3. The onboard terminal 10 sends transaction information and the user ID to the server 30.
4. The server 30 confirms order data in the transaction information and the user ID.
5. The server 30 initiates an authentication request to the onboard terminal 10 according to the user ID.
6. After receiving the authentication request, the onboard terminal 10 first determines whether the user device 20 has been connected.
7. If the user device 20 has been connected, the onboard terminal 10 calls an API interface of the user device 20 to initiate an authentication request.
8. The onboard terminal 10 sends information of the authentication request, the transaction information and the user ID to the user device 20.
9. The user device 20 acquires and parses the transaction information and the user ID in a message.
10. The user device 20 calls a device driver to acquire its own device ID.
11. The user device 20 digitally signs the transaction information, the device ID and the user ID using a private key stored in a trusted environment of the device.
12. The user device 20 sends digital signature results and original signature data together to the onboard terminal 10.
13. The onboard terminal 10 adopts a manner of passthrough, and does not process the data sent by the user device 20.
14. The onboard terminal 10 forwards to the server 30 the signature results and the original signature data which are sent by the user device 20.
15. The server 30 verifies the validity of the digital signatures of the user device 20 using a public key.
16. After the digital signatures are verified successfully, the server 30 acquires and parses the device ID and the user ID in the message.
17. The server 30 confirms the validity of the device ID and the user ID and the accuracy of the binding relationship, and sends a transaction result to the onboard terminal 10.
18. The onboard terminal 10 confirms completion of the transaction.

By performing the above operations, the payment authentication system 1 completes a payment authentication transaction through the user device 20, the onboard terminal 10 and the server 30.

According to the payment authentication system for an onboard terminal in the present application, through the payment authentication system consisting of a user device and a server connected to an onboard terminal, an ID of the user device and a user identifier of the onboard terminal are acquired, the user device identifier and the user identifier are encrypted in the onboard terminal, an encrypted file is transmitted to the server, the encrypted file is decrypted in the server to generate a private key certificate of the user device, and the private key certificate is encrypted and then transmitted to the onboard terminal. The private key certificate is decrypted in the onboard terminal, the decrypted private key certificate is stored in a trusted environment of the user device, and the private key certificate of the user device is called to digitally sign the transaction information, the user identifier and the user device identifier during a payment transaction. A digital signature file is sent to the server through the onboard terminal to allow the server to acquire the user identifier and the user device identifier when the digital signature file is valid, and the validity of and the binding relationship between the user identifier and the user device identifier are confirmed to complete the transaction information. The problem of a complicated payment process and poor payment security in an existing mobile payment technology applied to onboard terminals is solved. All files are transmitted in an encrypted manner in the process of acquiring the private key certificate, which improves the security of payment authentication. In the payment process of the onboard terminal, it is unnecessary for a motor vehicle driver to perform excessive operations, and the payment process is simple, thus guaranteeing the driver's safety and improving user's payment experience.

## Claims

1. A payment authentication method, the method comprising:
receiving (S120), by an onboard terminal (10), a payment authentication request sent by a server (30);
forwarding the payment authentication request to a user device (20), the payment authentication request including a user identifier, wherein the user device (20) has established a communication with the onboard terminal (10);
receiving (S130) encrypted payment certification information responded by the user device (20), the encrypted payment certification information not being input into the user device (20) by a user;
sending (S130) the encrypted payment certification information to the server (30), the encrypted payment certification information including the user identifier and a user device identifier;
receiving (SI40) a certification result sent by the server (30); and
performing payment processing according to the certification result,
wherein the certification result indicates whether there is a binding relationship between the user identifier and the user device identifier;
**characterised in that**, to establish the binding relationship between the user device identifier and the user identifier:
acquiring (Sill) the user device identifier at the onboard terminal (10);
encrypting the user device identifier and the user identifier with a public key of the server pre-stored in the onboard terminal (10); and
sending (S112) the encrypted user device identifier and the encrypted user identifier to the server (30); and
after establishing the binding relationship between the user device identifier and the user identifier,
generating (S211), at the server (30), a private key certificate according to the user device identifier and the user identifier;
encrypting (S211) the private key certificate at the server (30); and
sending (S211), from the server (30), the encrypted private key certificate to the onboard terminal (10) to allow payment processing;
wherein the encrypted payment certification information is obtained by the user device (20) by encrypting payment certification information using a private key certificate stored in the user device (20), and wherein after receiving the encrypted payment certification information, the server (30) decrypts the encrypted payment certification information using a public key of the private key certificate stored in the server (30).

2. The method of claim 1, wherein the payment certification information is generated by the user device (20) in response to the payment authentication request.

3. A device (20) comprising:
one or more processors; and
one or more computer storage media storing thereon computer-readable instructions that, when executed by the one or more processors, cause the one or more processors to perform acts comprising:
receiving (S220) a payment authentication request sent by an onboard terminal (10), the payment authentication request including a user identifier;
generating (S230) encrypted payment certification information in response to the payment authentication request, the encrypted payment certification information not being input into the device (20) by a user;
sending (S240) the encrypted payment certification information to a server (30) through the onboard terminal (10), the encrypted payment certification information including the user identifier and a user device identifier; and
requesting the server (30) to certify whether there is a binding relationship between the user identifier and the user device identifier,
**characterised in that**, generating the encrypted payment certification information in response to the payment authentication request includes:
generating the payment certification information in response to the payment authentication request; and
encrypting the payment certification information using a private key certificate stored in the device (20) to generate the encrypted payment certification information;
and
receiving a binding request sent by the onboard terminal (10);
sending the user device identifier to the onboard terminal (10) in response to the binding request to allow the onboard terminal (10) to encrypt the user device identifier and the user identifier with a public key of the server (30) pre-stored in the onboard terminal (10) and send the encrypted user device identifier and the encrypted user identifier to the server (30), so that the server decrypts the encrypted user device identifier and the encrypted user identifier and after establishing the binding relationship between the user device identifier and the user identifier:
generating (S211), at the server (30), the private key certificate according to the user device identifier and the user identifier;
encrypting (S211) the private key certificate at the server (30); and
sending (S211), from the server (30), the encrypted private key certificate to the onboard terminal (10) to allow payment processing; and
receiving (S212) the decrypted private key certificate sent by the onboard terminal (10),
wherein the server (30) decrypts the encrypted payment certification information using a public key of the private key certificate stored in the server (30).

4. One or more memories storing thereon computer-readable instructions that, when executed by one or more processors, cause the one or more processors to perform acts comprising:
sending a payment authentication request to a user device (20) through an onboard terminal (10), the payment authentication request including a user identifier;
receiving, at a server (30), encrypted payment certification information sent by the user device (20) through the onboard terminal (10), the encrypted payment certification information including the user identifier and a user device identifier and wherein the encrypted payment certification information is not input into the user device (20) by a user;
decrypting, at the server (30), the encrypted payment certification information;
certifying that there is a binding relationship between the user identifier and the user device identifier; and
sending (S211), from the server (30), the certification result to the onboard terminal (10),
**characterised by**:
acquiring (S211) the user device identifier at the onboard terminal (10);
encrypting the user device identifier and the user identifier with a public key of the server pre-stored in the on-board terminal (10);
sending (S112) the encrypted user device identifier and the encrypted user identifier to the server (30); and
after establishing the binding relationship between the user device identifier and the user identifier:
generating (S211), at the server (30), a private key certificate according to the user device identifier and the user identifier;
encrypting (S211) the private key certificate at the server (30); and
sending (S211), from the server (20), the encrypted private key certificate to the onboard terminal (10) to allow payment processing;
wherein the encrypted payment certification information is obtained by the user device (20) by encrypting payment certification information using a private key certificate stored in the user device (20), and wherein after receiving the encrypted payment certification information, the server (30) decrypts the encrypted payment certification information using a public key of the private key certificate stored in the server.

## Patentansprüche

1. Zahlungsauthentifizierungsverfahren, wobei das Verfahren Folgendes umfasst:
Empfangen (S120), durch ein integriertes Endgerät (10), einer Zahlungsauthentifizierungsanfrage, die von einem Server (30) gesendet wird;
Weiterleiten der Zahlungsauthentifizierungsanfrage an eine Benutzervorrichtung (20), wobei die Zahlungsauthentifizierungsanfrage eine Benutzerkennung beinhaltet, wobei die Benutzervorrichtung (20) eine Kommunikation mit dem integrierten Endgerät (10) eingerichtet hat;
Empfangen (S130) von verschlüsselten Zahlungszertifizierungsinformationen, die von der Benutzervorrichtung (20) beantwortet werden, wobei die verschlüsselten Zahlungszertifizierungsinformationen nicht von einem Benutzer in die Benutzervorrichtung (20) eingegeben werden;
Senden (S130) der verschlüsselten Zahlungszertifizierungsinformationen an den Server (30), wobei die verschlüsselten Zahlungszertifizierungsinformationen die Benutzerkennung und eine Benutzervorrichtungskennung beinhalten;
Empfangen (S140) eines Zertifizierungsergebnisses, das von dem Server (30) gesendet wird; und
Durchführen einer Zahlungsverarbeitung gemäß dem Zertifizierungsergebnis,
wobei das Zertifizierungsergebnis angibt, ob es ein bindendes Verhältnis zwischen der Benutzerkennung und der Benutzervorrichtungskennung gibt;
um das bindende Verhältnis zwischen der Benutzervorrichtungskennung und der Benutzerkennung einzurichten, **gekennzeichnet durch**:
Erlangen (S111) der Benutzervorrichtungskennung bei dem integrierten Endgerät (10);
Verschlüsseln der Benutzervorrichtungskennung und der Benutzerkennung mit einem öffentlichen Schlüssel des Servers, der vorab in dem integrierten Endgerät (10) gespeichert wird; und
Senden (S112) der verschlüsselten Benutzervorrichtungskennung und der verschlüsselten Benutzerkennung an den Server (30); und
nach Errichten des bindenden Verhältnisses zwischen der Benutzervorrichtungskennung und der Benutzerkennung,
Erzeugen (S211), bei dem Server (30), eines privaten Schlüsselzertifikats gemäß der Benutzervorrichtungskennung und der Benutzerkennung;
Verschlüsseln (S211) des privaten Schlüsselzertifikats bei dem Server (30); und
Senden (S211), von dem Server (30), des verschlüsselten privaten Schlüsselzertifikats an das integrierte Endgerät (10), um Zahlungsverarbeitung zu ermöglichen;
wobei die verschlüsselten Zahlungszertifizierungsinformationen von der Benutzervorrichtung (20) durch Verschlüsseln von Zahlungszertifizierungsinformationen unter Verwendung eines privaten Schlüsselzertifikats erhalten werden, das in der Benutzervorrichtung (20) gespeichert ist, und wobei nach Empfangen der verschlüsselten Zahlungszertifizierungsinformationen der Server (30) die verschlüsselten Zahlungszertifizierungsinformationen unter Verwendung eines öffentlichen Schlüssels des privaten Schlüsselzertifikats, das im Server (30) gespeichert ist, entschlüsselt.

2. Verfahren nach Anspruch 1, wobei die Zahlungszertifizierungsinformationen von der Benutzervorrichtung (20) in Antwort auf die Zahlungsauthentifizierungsanfrage erzeugt werden.

3. Vorrichtung (20), umfassend:
einen oder mehrere Prozessoren; und
ein oder mehrere Computerspeichermedien, auf welchen computerlesbare Anweisungen gespeichert sind, die, wenn sie von dem einen oder den mehreren Prozessoren ausgeführt werden, den einen oder die mehreren Prozessoren veranlassen, Handlungen durchzuführen, umfassend:
Empfangen (S220) einer Zahlungsauthentifizierungsanfrage, die von einem integrierten Endgerät (10) gesendet wird, wobei die Zahlungsauthentifizierungsanfrage eine Benutzerkennung beinhaltet;
Erzeugen (S230) verschlüsselter Zahlungszertifizierungsinformationen in Antwort auf die Zahlungsauthentifizierungsanfrage, wobei die verschlüsselten Zahlungszertifizierungsinformationen nicht von einem Benutzer in die Vorrichtung (20) eingegeben werden;
Senden (S240) der verschlüsselten Zahlungszertifizierungsinformationen an einen Server (30) durch das integrierte Endgerät (10), wobei die verschlüsselten Zahlungszertifizierungsinformationen die Benutzerkennung und eine Benutzervorrichtungskennung beinhalten; und
Anfragen beim Server (30) zu zertifizieren, ob es ein bindendes Verhältnis zwischen der Benutzerkennung und der Benutzervorrichtungskennung gibt,
**dadurch gekennzeichnet, dass** Erzeugen der verschlüsselten Zahlungszertifizierungsinformationen in Antwort auf die Zahlungsauthentifizierungsanfrage beinhaltet:
Erzeugen der Zahlungszertifizierungsinformationen in Antwort auf die Zahlungsauthentifizierungsanfrage; und
Verschlüsseln der Zahlungszertifizierungsinformationen unter Verwendung eines privaten Schlüsselzertifikats, das in der Vorrichtung (20) gespeichert ist, um die verschlüsselten Zahlungszertifizierungsinformationen zu erzeugen;
und
Empfangen einer Bindungsanfrage, die von dem integrierten Endgerät (10) gesendet wird;
Senden der Benutzervorrichtungskennung an das integrierte Endgerät (10) in Antwort auf die Bindungsanfrage, um dem integrierten Endgerät (10) zu ermöglichen, die Benutzervorrichtungskennung und die Benutzerkennung mit einem öffentlichen Schlüssel des Servers (30), der vorab in dem integrierten Endgerät (10) gespeichert wurde, zu verschlüsseln, und Senden der verschlüsselten Benutzervorrichtungskennung und der verschlüsselten Benutzerkennung an den Server (30), so dass der Server die verschlüsselte Benutzervorrichtungskennung und die verschlüsselte Benutzerkennung entschlüsselt, und nach Errichten des bindenden Verhältnisses zwischen der Benutzervorrichtungskennung und der Benutzerkennung:
Erzeugen (S211), bei dem Server (30), des privaten Schlüsselzertifikats gemäß der Benutzervorrichtungskennung und der Benutzerkennung;
Verschlüsseln (S211) des privaten Schlüsselzertifikats bei dem Server (30); und
Senden (S211), von dem Server (30), des verschlüsselten privaten Schlüsselzertifikats an das integrierte Endgerät (10), um Zahlungsverarbeitung zu ermöglichen; und
Empfangen (S212) des entschlüsselten privaten Schlüsselzertifikats, das von dem integrierten Endgerät (10) gesendet wird,
wobei der Server (30) die verschlüsselten Zahlungszertifizierungsinformationen unter Verwendung eines öffentlichen Schlüssels des privaten Schlüsselzertifikats, das im Server (30) gespeichert ist, entschlüsselt.

4. Ein oder mehrere Speicher, auf welchen computerlesbare Anweisungen gespeichert sind, die, wenn sie von einem oder mehreren Prozessoren ausgeführt werden, den einen oder die mehreren Prozessoren veranlassen, Handlungen durchzuführen, umfassend:
Senden einer Zahlungsauthentifizierungsanfrage an eine Benutzervorrichtung (20) durch ein integriertes Endgerät (10), wobei die Zahlungsauthentifizierungsanfrage eine Benutzerkennung beinhaltet;
Empfangen, bei einem Server (30), von verschlüsselten Zahlungszertifizierungsinformationen, die von der Benutzervorrichtung (20) durch das integrierte Endgerät (10) gesendet werden, wobei die verschlüsselten Zahlungszertifizierungsinformationen die Benutzerkennung und eine Benutzervorrichtungskennung beinhalten und wobei die verschlüsselten Zahlungszertifizierungsinformationen nicht von einem Benutzer in die Benutzervorrichtung (20) eingegeben werden;
Entschlüsseln, bei dem Server (30), der verschlüsselten Zahlungszertifizierungsinformationen;
Zertifizieren, dass es ein bindendes Verhältnis zwischen der Benutzerkennung und der Benutzervorrichtungskennung gibt; und
Senden (S211), von dem Server (30), des Zertifizierungsergebnisses an das integrierte Endgerät (10),
**gekennzeichnet durch**:
Erlangen (S211) der Benutzervorrichtungskennung bei dem integrierten Endgerät (10);
Verschlüsseln der Benutzervorrichtungskennung und der Benutzerkennung mit einem öffentlichen Schlüssel des Servers, der vorab in dem integrierten Endgerät (10) gespeichert wird;
Senden (S112) der verschlüsselten Benutzervorrichtungskennung und der verschlüsselten Benutzerkennung an den Server (30); und
nach Errichten des bindenden Verhältnisses zwischen der Benutzervorrichtungskennung und der Benutzerkennung:
Erzeugen (S211), bei dem Server (30), eines privaten Schlüsselzertifikats gemäß der Benutzervorrichtungskennung und der Benutzerkennung;
Verschlüsseln (S211) des privaten Schlüsselzertifikats bei dem Server (30); und
Senden (S211), von dem Server (20) des verschlüsselten privaten Schlüsselzertifikats an das integrierte Endgerät (10) um Zahlungsverarbeitung zu ermöglichen;
wobei die verschlüsselten Zahlungszertifizierungsinformationen von der Benutzervorrichtung (20) durch Verschlüsseln von Zahlungszertifizierungsinformationen unter Verwendung eines privaten Schlüsselzertifikats erhalten werden, das in der Benutzervorrichtung (20) gespeichert ist, und wobei nach Empfangen der verschlüsselten Zahlungszertifizierungsinformationen der Server (30) die verschlüsselten Zahlungszertifizierungsinformationen unter Verwendung eines öffentlichen Schlüssels des privaten Schlüsselzertifikats, das im Server gespeichert ist, entschlüsselt.

## Revendications

1. Procédé d'authentification de paiement, le procédé comprenant :
la réception (S120), par un terminal embarqué (10) d'une requête d'authentification de paiement envoyée par un serveur (30) ;
le transfert de la requête d'authentification de paiement à un dispositif utilisateur (20), la requête d'authentification de paiement incluant un identifiant utilisateur, dans lequel le dispositif utilisateur (20) a établi une communication avec le terminal embarqué (10) ;
la réception (S130) d'informations de certification de paiement chiffrées auxquelles a répondu le dispositif utilisateur (20), les informations de certification de paiement chiffrées n'étant pas entrées dans le dispositif utilisateur (20) par un utilisateur ;
l'envoi (S130) des informations de certification de paiement chiffrées au serveur (30), les informations de certification de paiement chiffrées incluant l'identifiant utilisateur et un identifiant de dispositif utilisateur ;
la réception (S140) d'un résultat de certification envoyé par le serveur (30) ; et
la réalisation d'un traitement de paiement selon le résultat de certification,
dans lequel le résultat de certification indique s'il y a une relation de liaison entre l'identifiant utilisateur et l'identifiant de dispositif utilisateur ;
**caractérisé en ce que**, pour établir la relation de liaison entre l'identifiant de dispositif utilisateur et l'identifiant utilisateur :
l'acquisition (S111) de l'identifiant de dispositif utilisateur au niveau du terminal embarqué (10) ;
le chiffrement de l'identifiant du dispositif utilisateur et du dispositif utilisateur avec une clé publique du serveur pré-stocké dans le terminal embarqué (10) ; et
l'envoi (S112) de l'identifiant de dispositif utilisateur chiffré et de l'identifiant utilisateur chiffré au serveur (30) ; et
après l'établissement de la relation de liaison entre l'identifiant de dispositif utilisateur et l'identifiant utilisateur,
la génération (S211), au niveau du serveur (30), d'un certificat de clé privée selon l'identifiant de dispositif utilisateur et l'identifiant utilisateur ;
le chiffrement (S211) du certificat de clé privée au niveau du serveur (30) ; et
l'envoi (S211), à partir du serveur (30), du certificat de clé privée chiffré au terminal embarqué (10) pour permettre le traitement du paiement ;
dans lequel les informations de certification de paiement chiffrées sont obtenues par le dispositif utilisateur (20) par le chiffrement d'informations de certification de paiement à l'aide d'un certificat de clé privée stocké dans le dispositif utilisateur (20), et dans lequel après la réception des informations de certification de paiement chiffrées, le serveur (30) déchiffre les informations de certification de paiement chiffrées à l'aide d'une clé publique du certificat de clé privée stocké dans le serveur (30).

2. Procédé selon la revendication 1, dans lequel les informations de certification de paiement sont générées par le dispositif utilisateur (20) en réponse à la requête d'authentification de paiement.

3. Dispositif (20) comprenant :
un ou plusieurs processeurs ; et
un ou plusieurs supports de stockage sur ordinateur stockant des instructions lisibles par ordinateur qui, lorsqu'elles sont exécutées par l'un ou plusieurs processeurs, amènent l'un ou plusieurs processeurs à effectuer des actions comprenant :
la réception (S220) d'une requête d'authentification de paiement envoyée par un terminal embarqué (10), la requête d'authentification de paiement incluant un identifiant utilisateur ;
la génération (S230) d'informations de certification de paiement chiffrées en réponse à la requête d'authentification de paiement, les informations de certification de paiement chiffrées n'étant pas entrées dans le dispositif (20) par un utilisateur ;
l'envoi (S240) des informations de certification de paiement chiffrées au serveur (30) via le terminal embarqué (10), les informations de certification de paiement chiffrées incluant l'identifiant utilisateur et un identifiant de dispositif utilisateur ; et
la requête au serveur (30) pour certifier s'il y a une relation de liaison entre l'identifiant utilisateur et l'identifiant de dispositif utilisateur,
**caractérisé en ce que**, la génération des informations de certification de paiement chiffrées en réponse à la requête d'authentification de paiement inclut :
la génération des informations de certification de paiement en réponse à la requête d'authentification de paiement ; et
le chiffrement des informations de certification de paiement à l'aide d'un certificat de clé privée stocké dans le dispositif (20) pour générer les informations de certification de paiement chiffrées ;
et
la réception d'une requête de liaison envoyée par le terminal embarqué (10) ;
l'envoi de l'identifiant de dispositif utilisateur au terminal embarqué (10) en réponse à la requête de liaison pour permettre au terminal embarqué (10) de chiffrer l'identifiant de dispositif utilisateur et l'identifiant utilisateur avec une clé publique du serveur (30) pré-stocké dans le terminal embarqué (10) et d'envoyer l'identifiant de dispositif utilisateur chiffré et l'identifiant utilisateur chiffré au serveur (30), de sorte que le serveur déchiffre l'identifiant de dispositif utilisateur chiffré et l'identifiant utilisateur chiffré et après l'établissement de la relation de liaison entre l'identifiant de dispositif utilisateur et l'identifiant utilisateur :
la génération (S211), au niveau du serveur (30), d'un certificat de clé privée selon l'identifiant de dispositif utilisateur et l'identifiant utilisateur ;
le chiffrement (S211) du certificat de clé privée au niveau du serveur (30) ; et
l'envoi (S211), à partir du serveur (30), du certificat de clé privée chiffré au terminal embarqué (10) pour permettre le traitement du paiement ; et
la réception (S212) du certificat de clé privée chiffré envoyé par le terminal embarqué (10),
dans lequel le serveur (30) déchiffre les informations de certification de paiement chiffrées à l'aide d'une clé publique du certificat de clé privée stocké dans le serveur (30).

4. Une ou plusieurs mémoires stockant des instructions lisibles par ordinateur qui, lorsqu'elles sont exécutées par un ou plusieurs processeurs, amènent l'un ou plusieurs processeurs à effectuer des actions comprenant :
l'envoi d'une requête d'authentification de paiement à un dispositif utilisateur (20) via un terminal embarqué (10), la requête d'authentification de paiement incluant un identifiant utilisateur ;
la réception, au niveau d'un serveur (30) d'informations de certification de paiement chiffrées envoyées par le dispositif utilisateur (20) via le terminal embarqué (10), les informations de certification de paiement chiffrées incluant l'identifiant utilisateur et un identifiant de dispositif utilisateur et dans lequel les informations de certification de paiement chiffrées ne sont pas entrées dans le dispositif utilisateur (20) par un utilisateur ;
le déchiffrement, au niveau du serveur (30), des informations de certification de paiement chiffrées ;
la certification qu'il y a une relation de liaison entre l'identifiant utilisateur et l'identifiant de dispositif utilisateur ; et
l'envoi (S211), à partir du serveur (30), du résultat de certification au terminal embarqué (10),
**caractérisé par** :
l'acquisition (S211) de l'identifiant de dispositif utilisateur au niveau du terminal embarqué (10) ;
le chiffrement de l'identifiant du dispositif utilisateur et du dispositif utilisateur avec une clé publique du serveur pré-stocké dans le terminal embarqué (10) ;
l'envoi (S112) de l'identifiant de dispositif utilisateur chiffré et de l'identifiant utilisateur chiffré au serveur (30) ; et
après l'établissement de la relation de liaison entre l'identifiant de dispositif utilisateur et l'identifiant utilisateur :
la génération (S211), au niveau du serveur (30), d'un certificat de clé privée selon l'identifiant de dispositif utilisateur et l'identifiant utilisateur ;
le chiffrement (S211) du certificat de clé privée au niveau du serveur (30) ; et
l'envoi (S211), à partir du serveur (20), du certificat de clé privée chiffré au terminal embarqué (10) pour permettre le traitement du paiement ;
dans lequel les informations de certification de paiement chiffrées sont obtenues par le dispositif utilisateur (20) par le chiffrement d'informations de certification de paiement à l'aide d'un certificat de clé privée stocké dans le dispositif utilisateur (20), et dans lequel après la réception des informations de certification de paiement chiffrées, le serveur (30) déchiffre les informations de certification de paiement chiffrées à l'aide d'une clé publique du certificat de clé privée stocké dans le serveur.
